# EUROPÄISCHE PATENTSCHRIFT

(11) **EP 1 320 699 B1**
(45) Veröffentlichungstag und Bekanntmachung des Hinweises auf die Patenterteilung: **24.11.2004**
(21) Anmeldenummer: 01978201.0
(22) Anmeldetag: 27.09.2001
(51) Int. Cl.: F16J 15/06, F16J 15/46, F16K 25/02, B08B 3/02, B08B 5/02

(54) **SPÜLEINRICHTUNG FÜR EIN DICHTSYSTEM UND VERFAHREN ZUR ANWENDUNG DERSELBEN**
RINSING DEVICE FOR A SEALING SYSTEM AND METHOD FOR USING THE SAME
DISPOSITIF DE NETTOYAGE POUR UN SYSTEME D'ETANCHEITE ET SON PROCEDE D'UTILISATION

(30) Priorität: 27.09.2000 DE 10047822
(43) Veröffentlichungstag der Anmeldung: 25.06.2003
(73) Patentinhaber: Glatt Systemtechnik GmbH, 01277 Dresden (DE)
(72) Erfinder: CORNELIUS, Hans-Dieter, 01217 Dresden (DE); PRITZKE, Heinz, 01737 Kesselsdorf/ OT Braunsdorf (DE)
(74) Vertreter: Pätzelt, Peter, Dipl.-Ing.
(86) Internationale Anmeldenummer: PCT/DE2001/003753
(87) Internationale Veröffentlichungsnummer: WO 2002/027219

(56) Entgegenhaltungen:
- DE-A- 3 229 841
- DE-A- 3 509 352
- DE-A- 19 652 169
- PATENT ABSTRACTS OF JAPAN vol. 2000, no. 01, 31. Januar 2000 (2000-01-31) & JP 11 270700 A (OSAKA KIKI SEIZO KK), 5. Oktober 1999 (1999-10-05)

## Beschreibung

### Technisches Gebiet

Die Erfindung betrifft eine Spüleinrichtung nach dem Oberbegriff des Anspruchs 1 sowie Verfahren zur Anwendung derselben nach dem Oberbegriff des Anspruchs 4.

### Stand der Technik

Aus der DE 19652169 A1 ist eine Dichteinrichtung mit einem Gehäuseelement und einem Schließelement bekannt, die eine Spüleinrichtung aufweist. Die Spüleinrichtung umschließt den gesamten Bereich der Dichtfläche am Gehäuseelement und/oder der Dichtung am Schließelement, derart dass ein Spülmedium, welches mindestens unmittelbar vor Erreichen der Dichtstellung durch die Spüleinrichtung geleitet wird, die Dichtfläche und/oder die Dichtung umspült und dabei im Dichtbereich vorhandene Verunreinigungen entfernt. Nachteilig ist dabei, dass Teile der Spüleinrichtung mindestens zeitweise relativ offen liegen.

Derartige Spüleinrichtungen werden insbesondere dort eingesetzt, wo sensible Güter, meist pulver- oder granulatförmige Güter, z. B. in der pharmazeutischen Industrie, transferiert werden. Als Spülmedium wird meist Luft eingesetzt.

In der Praxis hat sich dabei gezeigt, dass z. B. pharmazeutische Pulver als Ablagerungen auch in die Spüleinrichtung, d.h. in deren Kanäle eindringt. Dort setzt sich das Pulver insbesondere in Ecken fest und kann nur schwer wieder entfernt werden. Auch hat sich gezeigt, dass homogene Spülgas-ströme oft nur ungenügend wirksam sind.

### Darstellung der Erfindung

Der Erfindung liegt damit als Aufgabe zu Grunde, eine Spüleinrichtung der eingangs genannten Art zu schaffen, die eine wirksame Reinigung des gesamten Dichtsystems auch innerhalb der technologischen Verfahrensführung ermöglicht. Des Weiteren besteht die Aufgabe der Erfindung darin, ein Verfahren zur Anwendung der erfindungsgemäßen Einrichtung anzugeben.

Die Erfindung löst die Aufgabe für die Spüleinrichtung durch die im kennzeichnenden Teil des Anspruchs 1 genannten Merkmale. Die Aufgabe für das Verfahren wird durch die im kennzeichnenden Teil des Anspruchs 4 gelöst.

Vorteilhafte Weiterbildungen der Erfindung sind in den jeweiligen Unteransprüchen gekennzeichnet und werden nachstehend zusammen mit der Beschreibung der bevorzugten Ausführung der Erfindung, einschließlich der Zeichnung, näher dargestellt.

Der Kern der Erfindung besteht darin, dass die Spüleinrichtung selbst in besonderer Weise als geschlossenes System ausgebildet ist und mindestens ein weiterer verschließbarer Auslass für das Spülmedium vorhanden ist sowie mindestens eine Seite der Öffnung des Ringspaltes wellen- oder zahnartig ausgebildet ist.

Der weitere verschließbare Auslass für das Spülmedium wird in vorteilhafter Weise unmittelbar in Kombination mit dem Einlass des Spülmediums ausgeführt und an einen Sammelbehälter angeschlossen, damit die kontaminierten Reste des Spülmediums im technologisch erforderlichen Umfang gesondert nachbehandelt werden können.

Durch die wellen- oder zahnartige Ausbildung des Ringspaltes wirkt der aus dem Ringspalt austretende Strom des Spülmediums besonders effektiv auf Reste des transferierten Gutes und spült diese von den jeweiligen Oberflächen.

Die Ausführungsvariante der Spüleinrichtung nach Anspruch **2** ermöglicht im Normalbetrieb, d.h. wenn das Dichtsystem gespült werden soll, eine besonders hohe Gleichmäßigkeit der Austrittsparameter des Spülmediums aus dem Ringspalt.

Mit der erfindungsgemäßen Spüleinrichtung werden neue vorteilhafte Wirkungen erzielt. Das jeweilige transferierte Gut kann praktisch nicht in die Innenräume der Spüleinrichtung eindringen und die Innenräume können in vorteilhafter Weise mit einem oder mehreren Spülmedien gereinigt werden.

Die Reinigung der Spüleinrichtung selbst kann innerhalb des technologischen Prozesses erfolgen, wodurch besonders hohe Reinheitsforderungen erfüllt werden.

Verfahrensgemäß wird die Spüleinrichtung in einer Zeit, zu der sie betreffs ihres eigentlichen Zweckes, nämlich der Reinigung des Dichtsystems, außer Funktion ist, d.h. wenn die radial äußere elastische Dichtung am Schließelement die Öffnung des Ringspaltes zum Austritt des Spülmediums verschließt, selbst, mindestens jedoch der Ringkanal, gereinigt. Dazu wird das normal eingesetzte oder ein anderes Spülmedium von der Quelle über den Ringkanal zu dem weiteren Auslass für das Spülmedium geleitet.

Die verfahrensgemäße Anwendung der Spüleinrichtung kann nach den Ansprüchen 4 bis 6 variiert werden. Danach kann sowohl mit einem Spülmedium oder mit zwei Spülmedien der Ringkanal und die Verbindungsleitungen in einer Richtung wie auch wechselnd in beiden Richtungen gespült werden. Die größte Wirksamkeit wird erreicht, wenn zuerst das normal verwendete gasförmige Spülmittel in einer Richtung durch den Ringkanal geleitet wird, danach ein flüssiges Spülmittel mehrfach in beiden Richtungen und abschließend zur Trocknung des Ringkanals und der Verbindungsleitung wieder ein gasförmiges Spülmittel.

Die Erfindung wird nachstehend an einem Ausführungsbeispiel näher erläutert.

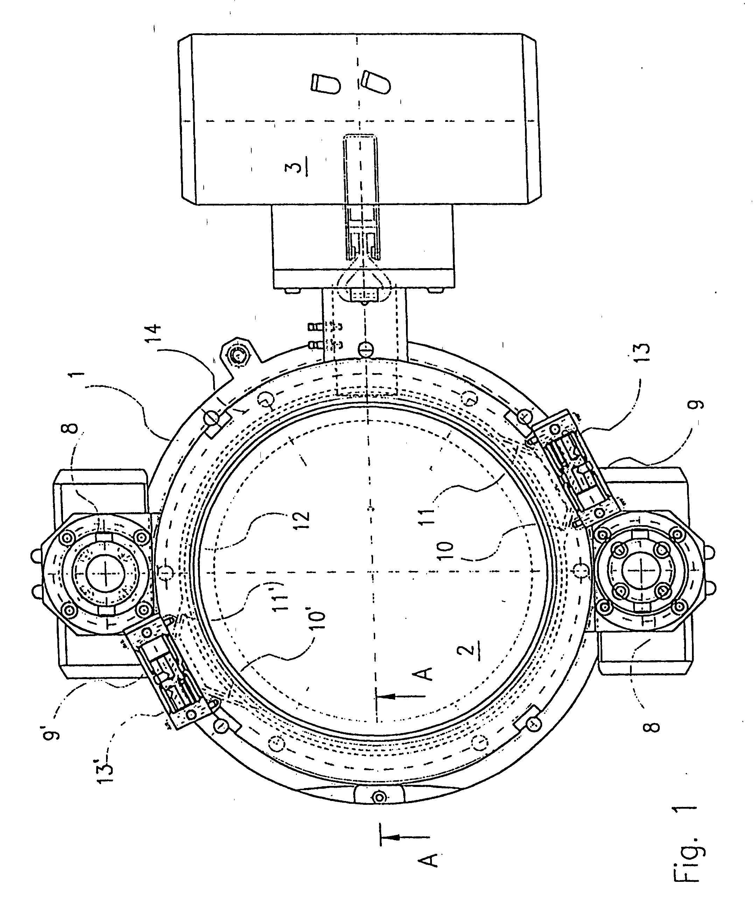

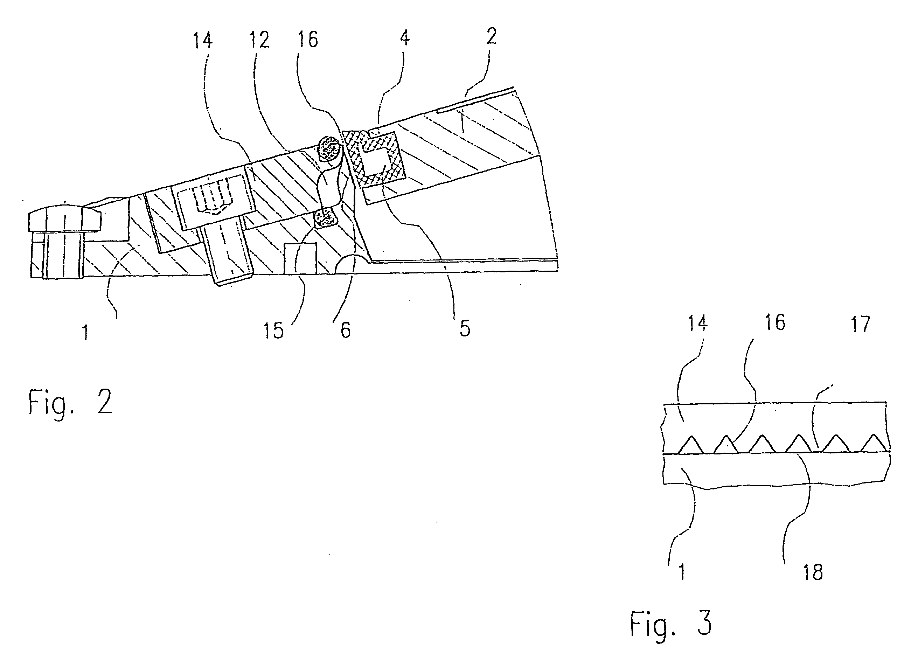

Die Zeichnung zeigt in Figur 1 eine erfindungsgemäße Spüleinrichtung an einer Kupplungshälfte in einer Gesamtansicht. Figur 2 zeigt eine Detailansicht im Bereich des Ringspaltes der Spüleinrichtung im Schnitt A-A in Figur 1. Die Figur 3 zeigt eine Draufsicht auf den Ringspalt in Figur 2.

Die erfindungsgemäße Spüleinrichtung befindet sich beispielsweise an einer Kupplungseinrichtung zum Transfer eines pharmazeutischen Pulvers von einem Transportbehälter in eine während des Transfers darunter angeordnete technologische Einrichtung. Sowohl der Transportbehälter als auch die technologische Einrichtung weisen je eine gleichartige Kupplungseinrichtung auf. Am Flansch der Kupplungseinrichtung sind unmittelbar an der Dichtebene Schwenkklappen angeordnet.

In Alleinstellung des Transportbehälters und der technologischen Einrichtung sind die Schwenkklappen in den zugehörigen Flanschen geschlossen. In dieser Schließstellung wird der Transportbehälter mit der technologischen Einrichtung gekuppelt.

Figur 1 zeigt eine Draufsicht auf eine Kupplungseinrichtung. Innerhalb eines Flansches 1 als Gehäuseelement ist eine Schließklappe 2 als Schließelement gelagert. Die Schließklappe 2 kann mittels eines Schwenkantriebes 3 um 90° geschwenkt werden. Vor dem Entkuppeln der Kupplungseinrichtungen werden die Innenräume 5 der radial äußeren Dichtungen 4 an den Schließklappen 2 über die Drucklufterzeuger mit einem inneren Überdruck beaufschlagt. Dadurch weiten sich die radial äußeren Dichtungen 4 und legen sich fest an den jeweiligen Dichtflächen 6 im Flansch 1 an.

Wie aus Figur 1 weiter ersichtlich ist, sind an der Kupplungseinrichtung zwei Zentriereinrichtungen 8 vorhanden, die über Zentrierbolzen gewährleisten, dass zwei Kupplungseinrichtungen immer in einer definierten zentrischen Lage zueinander gekuppelt werden.

Weiterhin sind gegenüber liegend zwei Ventile 9 und 9' vorhanden, die einerseits über zwei Verbindungsleitungen 10 und 11 bzw. 10' und 11' mit einem Ringkanal 12 verbunden und andererseits an einer nicht dargestellten Druckluftquelle und einem Wasseranschluss angeschlossen sind. Die Ventile 9 und 9' weisen je einen Schieber 13 bzw. 13' auf. Diese Schieber 13 bzw. 13' können in zwei Endlagen und eine Zwischenstellung gesteuert werden. In der Zwischenstellung sind die Verbindungsleitungen 10 und 11 bzw. 10' und 11' verschlossen. D.h. in dieser Stellung ist der Ringkanal 12 weder mit der Druckluftquelle noch mit dem Wasseranschluss verbunden. Wenn sich die Schieber 13 bzw. 13' in einer der Endlagenstellungen befinden, ist über die Verbindungsleitungen 10 und 10' der Ringkanal einseitig oder beidseitig an den Drucklufterzeuger angeschlossen und über die Verbindungsleitungen 11 bzw. 11' an den Wasseranschluss.

Der erfindungsgemäße weitere verschließbare Auslass für das Spülmedium wird im Beispiel jeweils unmittelbar über die Ventile 9 und 9' realisiert. Dabei wird das ausströmende verbrauchte Spülmedium einem gesonderten Sammelbehälter zugeführt. Figur 2 zeigt eine Detailansicht der Spüleinrichtung im Schnitt A-A in Figur 1. Die Schließklappe 2 befindet sich in der Schließstellung. Eine radial äußere Dichtung 4 weist einen Innenraum 5 auf, der mit einem Drucklufterzeuger in Verbindung steht. Die Dichtung 4 befindet sich in Figur 2 in einer Position gegenüber einer Dichtfläche 6 am Flansch 1, ohne dass beide Elemente fest aneinander liegen. Die Schließklappe 2 kann somit frei geschwenkt werden. Wenn zwei gleichartige Kupplungseinrichtungen miteinander gekuppelt sind, liegen die jeweiligen Flansche 1 und Schließklappen 2 eng aneinander und können gemeinsam geschwenkt werden.

Wie in Figur 2 weitet erkennbar ist, wird der Ringkanal 12 durch eine spezifische Ausdrehung im Flansch 1 und eine entsprechende Ausdrehung in einer Abdeckplatte 14 ausgebildet. Die Ausdrehungen sind dabei so gestaltet, dass keine Ecken, Kanten oder Hinterschneidungen entstehen. Die Abdeckplatte 14 und der Flansch 1 sind über eine Ringdichtung 15 gegeneinander abgedichtet. Damit ist der Ringkanal 12 allseitig geschlossen und weist nur einen Ringspalt 16 zwischen der Dichtung 4 und der Dichtfläche 6 auf.

In Figur 3 ist eine Draufsicht auf den Ringspalt 16 von der Schließplatte 2 aus dargestellt. Daraus ist zu erkennen, dass der Ringspalt 16 im Ausführungsbeispiel von einer glatten Auslasskante 18 am Flansch 1 und einer zahnartigen Kante 17 an der Abdeckplatte 14 gebildet wird. Dadurch entstehen in der Praxis eine Vielzahl paralleler Öffnungen, die über die Gestaltung des Ringkanals 12 eine düsenartige Ausbildung aufweisen. Der Strom eines Spülmediums, der den Ringkanal 12 über den Ringspalt 16 verlässt, besteht somit praktisch aus einer Vielzahl paralleler Strahlen mit einer hohen Strahlwirkung.

Nachfolgend soll die Spüleinrichtung in Funktion näher beschrieben werden. Ausgehend von einer geschlossenen Schließklappe 2 liegt die radial äußere Dichtung 4 fest an der Dichtfläche 6 an und dichtet dabei den Ringspalt 16 ab. In dieser Stellung kann die entsprechende Kupplungseinrichtung allein stehend oder mit der jeweils anderen Kupplungseinrichtung gekuppelt sein.

Wenn die zwei Kupplungseinrichtungen miteinander gekuppelt sind, werden die radial äußeren Dichtungen 4 vom Überdruck im Innenraum 5 entlastet und ziehen sich zusammen. Die Schließklappen 2 können gemeinsam geschwenkt werden und das pharmazeutische Pulver kann transferieren.

Nach Beendigung des Transfers werden die Schließklappen 2 wieder geschlossen, wobei bevor die radial äußeren Dichtungen 4 im Innenraum 5 wieder mit Druck beaufschlagt werden, wird von einem Drucklufterzeuger Luft als Spülmedium über die Ventile 9 und 9' in den Ringkanal 12 eingeleitet und durch den Ringspalt 16 ausgeblasen. Dadurch werden Reste des transferierten Pulvers, welche sich an der radial äußeren Dichtung 4 und an der Dichtfläche 6 am Flansch 1 abgelagert haben, weggeblasen.

Der düsenartig gestaltete Ringspalt 16 gewährleistet dabei eine besonders gute Reinigungswirkung der austretenden Luft.

Nach der beschriebenen Reinigung wird der Innenraum 5 der radial äußeren Dichtung 4 mit Druck beaufschlagt und die Dichtung 4 an der Dichtfläche 6 am Flansch 1 gepresst. Dabei kann davon ausgegangen werden, dass keine Reste des transferierten pharmazeutischen Pulvers zwischen der Dichtung 4 und der Dichtfläche 6 verblieben sind. Die Kupplungseinrichtungen können voneinander entfernt werden.

Insbesondere bei sensiblen Gütern, wie es auch pharmazeutische Pulver sind, ist eine besondere Reinheit der spezifischen technologischen Einrichtungen erforderlich. Einerseits beim Transfer unterschiedlicher Güter oder auch nach längerem Transfer eines Gutes ist es deshalb technologisch erforderlich, die gesamte Einrichtung einer gesonderten Reinigung zu unterziehen, damit jegliche Reste, die trotz großer Sorgfalt und durch Anwendung der Spüleinrichtung die Leitungswege der Spüleinrichtung kontaminiert haben können, beseitigt werden.

Zu diesem Zweck wird bei geschlossenem Ringspalt 16 über die Verbindungsleitung 10 Luft in den Ringkanal 12 eingeblasen und über die Verbindungsleitung 10' ausgelassen. Nach dieser Vorreinigung wird zur Hauptreinigung über die Verbindungsleitung 11 Wasser in den Ringkanal 12 eingelassen und über die Verbindungsleitung 11' ausgelassen. Abschließend wird zum Ausblasen möglicher Wasserreste wieder über die Verbindungsleitung 10 Luft in den Ringkanal 12 eingeblasen und über die Verbindungsleitung 10' ausgelassen.

Durch diese Verfahrensführung wird mit großer Sicherheit praktisch jede Verunreinigung oder auch nur Kontaminationen der Räume der Spüleinrichtung gereinigt. Dabei erweist sich in besonders vorteilhafter Weise die abgerundete Ausbildung des Ringkanals und der Verbindungsleitungen, da sich keine Reste in Ecken festsetzen können.

Die verfahrensgemäße Anwendung der Spüleinrichtung kann in einem breiten Bereich variiert werden. Als Spülmedien können beliebige gasförmige oder flüssige Stoffe eingesetzt werden. Auch ist es möglich, die Richtung des Spülmediums mehrfach zu ändern oder das Spülmedium in gepulster Form durch die Spüleinrichtung zu leiten.

| **Liste der verwendeten Bezugszeichen** | | | |
|---|---|---|---|
| 1 | Flansch | 2 | Schließklappe |
| 3 | Schwenkantrieb | 4 | radial äußere Dichtung |
| 5 | Innenraum | 6 | Dichtfläche |
| 7 | | 8 | Zentriereinrichtung |
| 9 | Ventil | 9' | Ventil |
| 10 | Verbindungsleitung | 10' | Verbindungsleitung |
| 11 | Verbindungsleitung | 11' | Verbindungsleitung |
| 12 | Ringkanal | 13 | Schieber |
| 13' | Schieber | 14 | Abdeckplatte |
| 15 | Ringdichtung | 16 | Ringspalt |
| 17 | zahnartige Kante | 18 | Auslasskante |

## Patentansprüche

1. Spüleinrichtung, umfassend ein Dichtsystem an einem Gehäuseelement mit einer Dichtfläche (6) und einem zugeordnetem Schließelement (2) mit einer radial äußeren elastischen Dichtung (4), sowie mindestens eine Quelle für ein Spülmedium, eine Verbindungsleitung von der Quelle zu einen Ringkanal (12), der im Gehäuseelement angeordnet ist, und einen Ringspalt (16), aus dem das Spülmedium austreten kann, wobei der Ringspalt in der Schließstellung des Schließelementes von der radial äußeren elastischen, Dichtung (4) verschlossen ist, **dadurch gekennzeichnet, dass** der Ringkanal, der über die Verbindungsleitung mit der Quelle verbunden ist, bis auf den Ringspalt und die Verbindungsleitung allseitig geschlossen ist, dass mindestens ein weiterer verschließbarer Auslass (10', 11') für das Spülmedium vorhanden ist, der mit dem Ringkanal (12) verbunden ist, und dass mindestens eine Seite der Öffnung des Ringspaltes (16) wellen- oder zahnartig ausgebildet ist.

2. Spüleinrichtung nach Anspruch 1, **dadurch gekennzeichnet, dass,** dass Verbindungsleitungen von der Quelle zum Ringkanal (12) an mindestens zwei gegenüber liegenden Stellen in den Ringkanal einmünden.

3. Spüleinrichtung nach einem der Ansprüche 1 und 2, **dadurch gekennzeichnet, dass** mindestens zwei Quellen für unterschiedliche Spülmedien vorhanden sind.

4. Verfahren zur Anwendung einer Einrichtung nach einem der Ansprüche 1 bis 3, **dadurch gekennzeichnet, dass** bei geschlossenem Schließelement (2) und geschlossenem Ringspalt (16) sowie bei geöffnetem weiteren Auslass (10', 11') ein Spülmedium von der Quelle in den Ringkanal (12) eingelassen und über den weiteren Auslass (10', 11') ausgelassen wird.

5. Verfahren nach Anspruch 4, **dadurch gekennzeichnet, dass** nacheinander oder abwechseln ein flüssiges und ein gasförmiges Spülmedium mindestens durch den Ringkanal (12) geleitet wird.

6. Verfahren nach Anspruch 4 oder 5, **dadurch gekennzeichnet, dass** ein oder verschiedene Spülmedium nacheinander oder abwechselnd in entgegen gesetzter Richtung mindestens durch den Ringkanal (12) geleitet wird bzw. werden.

## Claims

1. Flushing device comprising a sealing system on a housing element with a sealing surface (6) and an associated closing element (2) with a radially outer elastic seal (4), and also comprising at least one source for a flushing medium, a connecting line from the source to an annular channel (12), which is arranged in the housing element, and an annular gap (16), out of which the flushing medium can pass, the annular gap being closed by the radially outer elastic seal (4) in the closed position of the closing element, **characterized in that** the annular channel, which is connected to the source via the connecting line, is closed on all sides apart from the annular gap and the connecting line, **in that** at least one further closable outlet (10', 11') is provided for the flushing medium, this outlet being connected to the annular channel (12), and **in that** at least one side of the opening of the annular gap (16) is of undulating or serrated design.

2. Flushing device according to Claim 1, **characterized in that** connecting lines from the source to the annular channel (12) open out into the annular channel at at least two mutually opposite locations.

3. Flushing device according to either of Claims 1 and 2, **characterized in that** there are at least two sources for different flushing media.

4. Process for using a device according to one of Claims 1 to 3, **characterized in that**, with the closing element (2) closed and the annular gap (16) closed and with the further outlet (10', 11') open, a flushing medium is let into the annular channel (12) from the source and is let out via the further outlet (10', 11').

5. Process according to Claim 4, **characterized in that** a liquid flushing medium and a gaseous flushing medium are passed, one after the other or alternately, at least through the annular channel (12).

6. Process according to Claim 4 or 5, **characterized in that** one or more flushing media are passed, one after the other or alternately, in opposite directions, at least through the annular channel (12).

## Revendications

1. Dispositif de nettoyage, comprenant un système d'étanchéité sur un élément de boîtier avec une surface d'étanchéité (6) et un élément de fermeture associé (2) avec un joint élastique radialement extérieur (4) ainsi qu'au moins une source de milieu de nettoyage, une conduite de connexion de la source à un conduit annulaire (12) qui est disposé dans l'élément de boîtier, et une fente annulaire (16), de laquelle peut sortir le milieu de nettoyage, la fente annulaire étant fermée dans la position de fermeture de l'élément de fermeture par le joint élastique radialement extérieur (4), **caractérisé en ce que** le conduit annulaire, qui est connecté à la source par le biais de la conduite de connexion, est fermé de tous côtés jusqu'au niveau de la fente annulaire et de la conduite de connexion, **en ce qu'**au moins une autre sortie obturable (10', 11') pour le milieu de nettoyage est prévue, laquelle est connectée au conduit annulaire (12) et **en ce qu'**au moins un côté de l'ouverture de la fente annulaire (16) est réalisé sous forme ondulée ou sous forme dentelée.

2. Dispositif de nettoyage selon la revendication 1, **caractérisé en ce que** des conduites de connexion de la source au conduit annulaire (12) débouchent dans le conduit annulaire au niveau d'au moins deux emplacements opposés.

3. Dispositif de nettoyage selon l'une quelconque des revendications 1 et 2, **caractérisé en ce qu'**au moins deux sources sont prévues pour des milieux de nettoyage différents.

4. Procédé d'utilisation d'un dispositif selon l'une quelconque des revendications 1 à 3, **caractérisé en ce que**, lorsque l'élément de fermeture (2) est fermé et que la fente annulaire (16) est fermée, ainsi que lorsque la sortie supplémentaire (10', 11') est ouverte, un milieu de nettoyage est admis depuis la source dans le conduit annulaire (12) et ressort par la sortie supplémentaire (10', 11').

5. Procédé selon la revendication 4, **caractérisé en ce que** l'on introduit au moins à travers le conduit annulaire (12), l'un après l'autre ou en alternance, un milieu de nettoyage liquide et un milieu de nettoyage gazeux.

6. Procédé selon la revendication 4 ou 5, **caractérisé en ce que** l'on introduit au moins à travers le conduit annulaire (12) un ou plusieurs milieux de nettoyage l'un après l'autre ou en alternance dans une direction opposée.
